(19) Europäisches Patentamt
European Patent Office
Office européen des brevets

(11) **EP 2 053 801 B1**

(12) **EUROPEAN PATENT SPECIFICATION**

(45) Date of publication and mention
of the grant of the patent:
**30.06.2010 Bulletin 2010/26**

(51) Int Cl.:
***H04L 12/56*** (2006.01)

(21) Application number: **07020811.1**

(22) Date of filing: **24.10.2007**

(54) **Method for allocating resources of a system to at least two users**

Verfahren zur Zuteilung von Ressourcen eines Systems an mindestens zwei Benutzer

Procédé d'affectation de ressources d'un système pour au moins deux utilisateurs

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**29.04.2009 Bulletin 2009/18**

(73) Proprietors:
• **Mitsubishi Electric R&D Centre Europe B.V.**
**1119 NS Schiphol Rijk (NL)**
Designated Contracting States:
**FR**
• **Mitsubishi Electric Corporation**
**Chiyoda-ku**
**Tokyo**
**100-8310 (JP)**
Designated Contracting States:
**AT BE BG CH CY CZ DE DK EE ES FI GB GR HU IE IS IT LI LT LU LV MC MT NL PL PT RO SE SI SK TR**

(72) Inventors:
• **Assaad, Mohamad**
**75012 Paris (FR)**
• **Mourad, Alain**
**35708 Rennes Cedex 7 (FR)**

(74) Representative: **Maillet, Alain**
**Cabinet LE GUEN MAILLET**
**5, place Newquay**
**BP 70250**
**35802 Dinard Cedex (FR)**

(56) References cited:
• **ZORBA N ET AL: "Robust Multibeam Opportunistic Schemes Under Quality of Service Constraints" COMMUNICATIONS, 2007. ICC '07. IEEE INTERNATIONAL CONFERENCE ON, IEEE, PI, 1 June 2007 (2007-06-01), pages 5371-5376, XP031126522 ISBN: 978-1-4244-0353-0**
• **KAZMI M ET AL: "Scheduling algorithms for HS-DSCH in a WCDMA mixed traffic scenario" PERSONAL, INDOOR AND MOBILE RADIO COMMUNICATIONS, 2003. PIMRC 2003. 14 TH IEEE PROCEEDINGS ON SEPT. 7-10, 2003, PISCATAWAY, NJ, USA,IEEE, vol. 2, 7 September 2003 (2003-09-07), pages 1485-1489, XP010679312 ISBN: 978-0-7803-7822-3**
• **SORENSEN T B ET AL: "Performance evaluation of proportional fair scheduling algorithm with measured channels" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, vol. 4, 25 September 2005 (2005-09-25), pages 2580-2585, XP010878920 ISBN: 978-0-7803-9152-9**

**Description**

The present invention relates to a method for allocating resources of a system to at least two users.

In communication and storage systems, multiple users are sharing the system resources. The system resources are decomposed into resource elements. Examples of resource elements are time slots and/or frequency bands and/or codes and/or antennas and/or buffers and/or memories and/or processors, and so on.

In order to be satisfied, each user needs to get the necessary resource elements which warrant the quality of service the user requires.

The resources allocation scheme is evaluated in terms of the maximum benefit the system can derive from given resources and the fairness in sharing the system resources among users.

In communication systems, the benefit is measured by the throughput and the spectral efficiency, and fairness is measured by the degree of "meeting the data rate and the delay constraints of the different users".

A resources allocation scheme has therefore two main objectives: maximizing the benefit or efficiency by allocating the resource elements to the most appropriate

users and achieving fairness between the users. These two objectives are conflicting and there is a risk in achieving one at the expense of the other. A trade-off between fairness and efficiency should be achieved by the resources allocation scheme.

Two classes of resources allocation schemes exist: static ones and dynamic ones.

Static resources allocation schemes allocate resource elements to users in a fixed fashion independently of the communication conditions experienced by different users, whereas dynamic resources allocation schemes adapt the resource elements allocated to users according to their instantaneous communication conditions.

The resources allocation scheme depends on the number and nature of sharing dimensions, i.e. number and nature of different resource elements to share.

The problem of resources allocation has been addressed widely in the literature and many techniques have been proposed. An immediate technique known as Max C/I is commonly used in the literature. Another famous technique known as Proportional Fair (PF) has been proposed in the paper of J.M. Holtzman entitled "Asymptotic analysis of Proportional Fair algorithm" and published in the Proc. of 12th IEEE PIMRC, as well as in the paper of A. Jalali, R. Padovani, and R. Pankaj, entitled "Data Throughput of CDMA-HDR a high efficiency-high data Wireless personal communication system" and published in Proc. 50th annual Int. VTC, vol. 3, Tokyo, May 2000, pp. 1854-1858.

In Max C/I, the resources allocation scheme tracks the instantaneous channel quality indicators of each user and allocates the resources to the user which has the best channel quality indicators on that resources. This technique maximizes the over all system capacity but suffers from a problem of fairness between users especially for users which have relatively poor channel quality indicators (e.g. users at the cell border in cellular systems).

To alleviate this problem of fairness, PF resources allocation scheme has been proposed with the aim of a reasonable trade-off between efficiency and fairness. It consists in allocating resource elements to the user with the best instantaneous rate relative to its currently achieved average rate.

The paper of N Zorba entitled "Robust multibeam opportunistic schemes under quality of service constraints" and published in IEEE international conference on June 1, 2007 page 5371 to 5376 discloses a scheduling algorithm based in partial channel state information at the transmitter and in which a minimum rate per user restriction is required for each user.

The solutions proposed by the aforementioned prior arts are not optimal and provide imperfect results.

The aim of the invention is therefore to propose a method and device which make it possible to allocate resources of a system to at least two users with improved balance between capacity and fairness.

To that end, the present invention concerns a method for allocating resources of a system to at least two users, the resources of the system being decomposed into resource elements, characterized in that the method comprises the steps of

- obtaining, for each user, the minimum bit rate that should be provided to the user,
- obtaining channel quality indicators from each user for at least a part of the resource elements,
- determining, for each user, an information from at least one channel quality indicator,
- determining, for each user, a time average of the information,
- determining, for each user, the maximum instantaneous rate when all the resources elements are assumed to be allocated to the user,
- determining, for each user, the time average of the maximum instantaneous rate when all the resources elements are assumed to be allocated to the user,
- allocating resource elements to users according to the optimization of a utility function taking into account the minimum bit rates, the information obtained from at least one channel quality indicator, the time averages of the information, the maximum instantaneous rates when all resource elements are assumed to be allocated to the user and the time average of the maximum instantaneous rate determined for the user.

The present invention concerns also a device for allocating resources of a system to at least two users, the resources of the system being decomposed into resource elements, characterized in that the device for allocating resources comprises:

- means for obtaining, for each user, the minimum bit rate that should be provided to the user,
- means for obtaining channel quality indicators from each user for at least a part of the resource elements,
- means for determining, for each user, an information from at least one channel quality indicator,
- means for determining, for each user, a time average of the information
- means for determining, for each user, the maximum instantaneous rate when all the resources elements are assumed to be allocated to the user,
- means for determining, for each user, the time average of the maximum instantaneous rate when all the resources elements are assumed to be allocated to the user,
- means for allocating resource elements to users according to the optimization of a utility function taking into account the minimum bit rates, the information obtained from at least one channel quality indicator, the time averages of the information, the maximum instantaneous rates when all resource elements are assumed to be allocated to the user and the time average of the maximum instantaneous rate determined for the user.

Thus, it is possible to allocate resources of a system to at least two users with an improved balance between capacity and fairness.

According to a particular feature, the system resources are multi dimensional.

Thus, the present invention is adapted to any kind of resources allocation schemes.

According to a particular feature, the utility function is composed of at least three sub functions $f_i^{(1)}(n)$, $f_i^{(2)}(n)$, and $f_i^{(3)}(n)$, a first sub function $f_i^{(1)}(n)$ prioritizing the users having the best trade off between variation of the time-average of the bit rate at the previous and the current transmission time intervals compared to the minimum bit rate that should be provided to the user, a second sub function $f_i^{(2)}(n)$ prioritizing the users having the highest variation between the bit rate the user can achieve at the current time interval and the instantaneous rate achieved when all resource elements are assumed to be allocated to the user and a third function $f_i^{(3)}(n)$ prioritizing the users having the highest variation between the bit rate the user can achieve at the current time interval and the time average of the instantaneous rate achieved when all resource elements are assumed to be allocated to the user.

Thus, it is possible to allocate resources of a system to at least two users with an improved balance between capacity and fairness.

According to a particular feature, each of the at least three sub functions $f_i^{(3)}(n)$ is further multiplied by a respective factor $\alpha_i^{(1)}(n)$, $\alpha_i^{(2)}(n)$, and $\alpha_i^{(3)}(n)$, the factors being updated at each time interval.

According to a particular feature, the information from at least one channel quality indicator is a function of a variation of channel quality indicators between consecutively allocated resource elements.

Thus, it is not necessary to determine the bit rate the user can achieve. The present algorithm is simplified.

According to a particular feature, the information from at least one channel quality indicator is the bit rate the user can achieve which is determined considering the channel quality indicators obtained from the user for at least a part of the resource elements.

Thus, the present invention is adapted to real conditions.

According to a particular feature, the system resources are bi dimensional and the resource elements are sub-carriers or spreading codes or antennas which are allocated for a time slot.

According to a particular feature, the bit rate the user can achieve is further determined by selecting the maximum bit rate the user can achieve among different bit rates determined according to different modulation and coding schemes

According to a particular feature, the utility function is composed of three sub functions $f_i^{(1)}(n)$, $f_i^{(2)}(n)$ and $f_i^{(3)}(n)$ wherein:

$$f_i^{(1)}(n) = \delta \operatorname{sign}\left(R_{min,i} - R_i(n-1)\right)\left(\frac{R_i(n) - R_i(n-1)}{R_{min,i}}\right)$$

$$f_i^{(2)}(n) = \frac{r_i(n)L - \overline{r_i(n)}L_i(n)}{\overline{r_i(n)}L_i(n)}$$

$$f_i^{(3)}(n) = \frac{r_i(n)L - \overline{R_i(n)}L_i(n)}{\overline{R_i(n)}L_i(n)}$$

where i identifies the user, $n$ identifies the current transmission time interval, $n$-1 identifies the previous transmission time interval, $\delta$ is equal to the value one or minus one, $R_{min,i}$ is the minimum bit rate that should be provided to the user, $R_i(x)$ is the time-average at the transmission time interval $x$ of the bit rate $r_i(x)$ the user can achieve at the transmission time interval $x$, $L$ is the number of resource elements, $L_i(n)$ is equal to the number of resource elements used for determining $r_i(n)$, $r_i(n)$ is the maximum instantaneous rate achieved when all the resources elements are assumed to be allocated to the user at the current transmission time interval and, $\overline{R_i(n)}$ time-average of maximum instantaneous rate $\overline{r_i(n)}$.

According to a particular feature, the method comprises further step of calculating, for each user :

$\Delta_i = (R_{min,i} - R_i(n-1))$ with $i$ =1 to the total number of users $I$,

and if each calculated difference $\Delta_i$ is strictly negative, $\delta$ is equal to -1.

According to a particular feature, the method comprises further step of calculating for each user, an instantaneous channel priority $c_i(n)$ according to the following formula:

$$c_i(n) = \frac{\dfrac{\overline{r_i(n)}}{R_i(n)}}{\sum_j \dfrac{r_j(n)}{R_j(n)}}.$$

According to a particular feature, the method comprises further steps of:

- obtaining, for each user, the maximum acceptable traffic delay $d_{max,i}$,
- determining, for each user, the quantity $q_i(n)$ of packets in the buffer assigned to the user i,
- determining, for each user, the delay $d_i(n)$ of transfer of the packets comprised in the buffer assigned to the user.
- determining, for each user, the percentage $v$ of packets violating the quality of service constraints of the user,
- calculating, for each user, an instantaneous service priority $p_i(n)$ according to the following formula:

$$p_i(n) = \frac{(1 + v_i(n))\left(\dfrac{q_i(n)}{R_{min,i}}\right)\left(\dfrac{1 + d_i(n)}{1 + d_{max,i}}\right)}{\sum_j (1 + v_j(n))\left(\dfrac{q_j(n)}{R_{min,j}}\right)\left(\dfrac{1 + d_j(n)}{1 + d_{max,j}}\right)}$$

- calculating, for a each user, a time-average service priority $P_i(n)$ according to the following formula:

$$P_i(n) = (1 - \frac{1}{t_c})P_i(n-1) + \frac{1}{t_c}p_i(n),$$

where $t_c$ is a time duration,

- calculating, for each user, a time-average channel priority $C_i(n)$ according to the following formula:

$$C_i(n) = (1 - \frac{1}{t_c})C_i(n-1) + \frac{1}{t_c}c_i(n).$$

According to a particular feature, each sub function $f_i^{(1)}(n)$, $f_i^{(2)}(n)$ and $f_i^{(3)}(n)$ is further weighted by a respective factor $\alpha_i^{(1)}(n)$, $\alpha_i^{(2)}(n)$, and $\alpha_i^{(3)}(n)$ determined according to the following formulas:

$$\alpha_i^{(1)}(n) = \alpha_i^{(1)}(n-1) + (p_i(n) - P_i(n-1))\alpha_i^{(1)}(n-1)$$

$$\alpha_i^{(2)}(n) = \alpha_i^{(2)}(n-1) + (c_i(n) - C_i(n-1))\alpha_i^{(2)}(n-1)$$

$$\alpha_i^{(3)}(n) = \alpha_i^{(3)}(n-1) + (c_i(n) - C_i(n-1))\alpha_i^{(3)}(n-1).$$

According to a particular feature, the weighted sub functions are summed and the sum is multiplied by a fairness scaling factor $\pi_i$ as:

$$\pi_i = \frac{R_{min,i}}{\sum_j R_{min,j}}.$$

According to still another aspect, the present invention concerns a computer program which can be directly loadable into a programmable device, comprising instructions or portions of code for implementing the steps of the method according to the invention, when said computer program is executed on a programmable device.

Since the features and advantages relating to the computer program are the same as those set out above related to the method and device according to the invention, they will not be repeated here.

The characteristics of the invention will emerge more clearly from a reading of the following description of an example embodiment, the said description being produced with reference to the accompanying drawings, among which:

Fig. 1 is a diagram representing the architecture of a communication system in which the present invention is implemented ;
Fig. 2 is a block diagram of a device for allocating resources according to the present invention ;
Figs. 3a to 3e represent an algorithm for allocating resources according to the present invention;
Fig. 4a to 4c represent block diagrams of the device for allocating resources when it is implemented into the form of a dedicated integrated circuit.

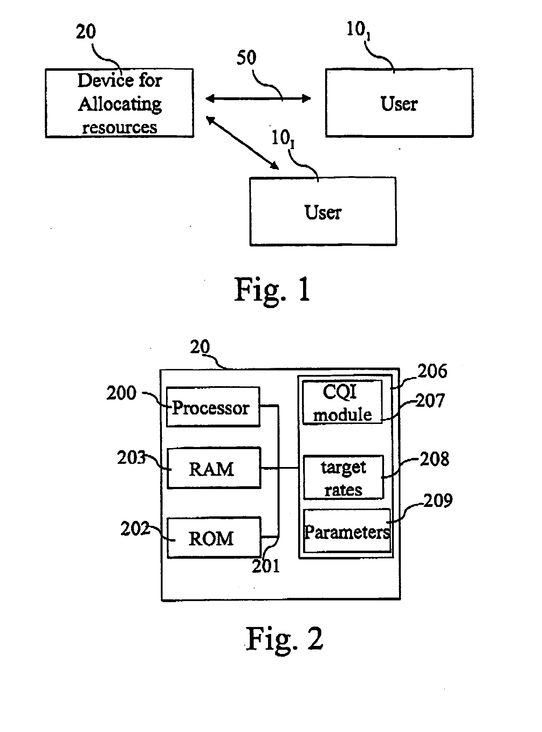

**Fig. 1** is a diagram representing the architecture of a communication system in which the present invention is implemented.

The present invention will be described in an example wherein the allocated resources are resources of a communication system but the present invention is also applicable in any other systems wherein resources need to be allocated to plural users. Examples of resources are buffers or memories or processors of devices.

When the allocated resources are resources of a communication system, the resources are as example time slots and/or frequency bands and/or codes and/or antennas, etc.

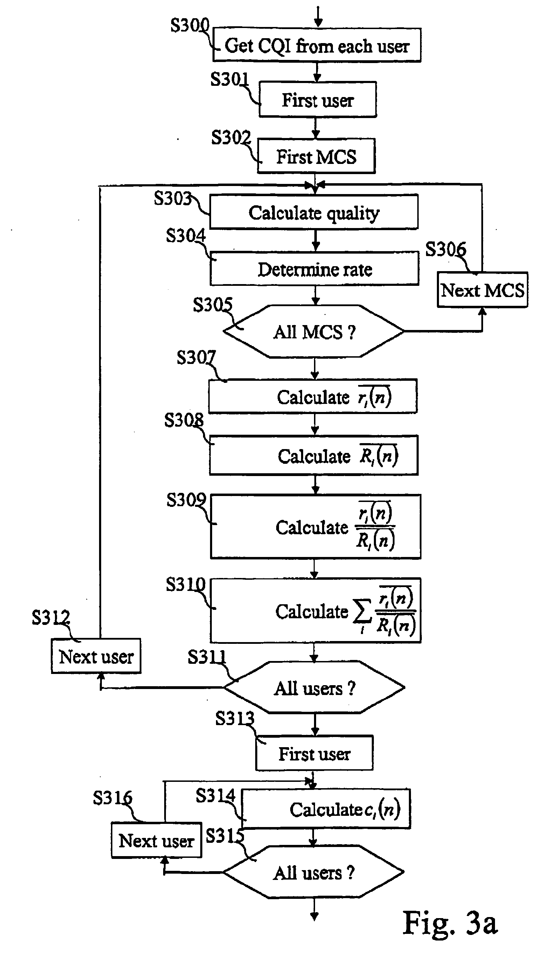

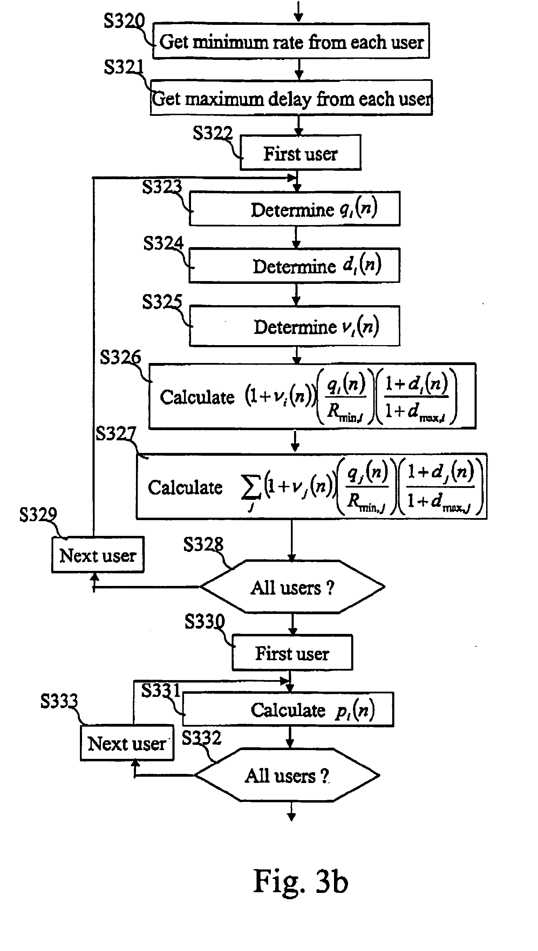

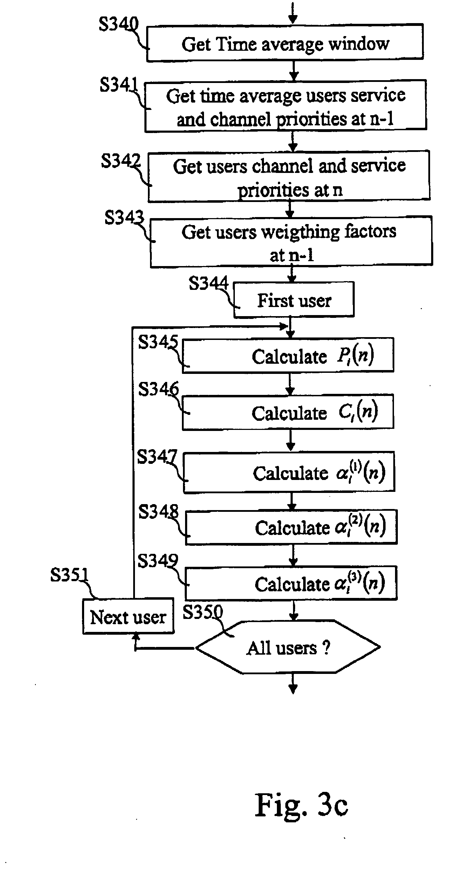

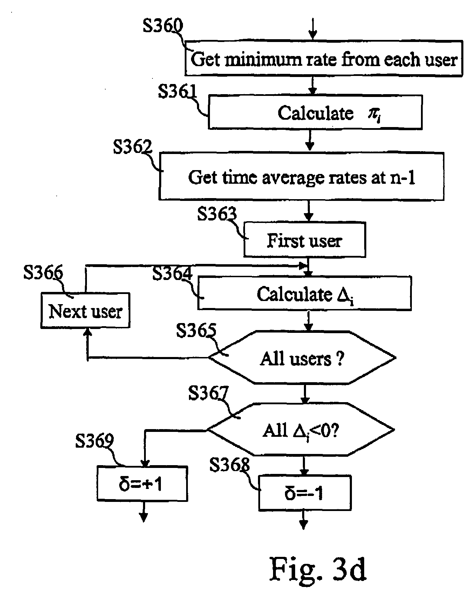

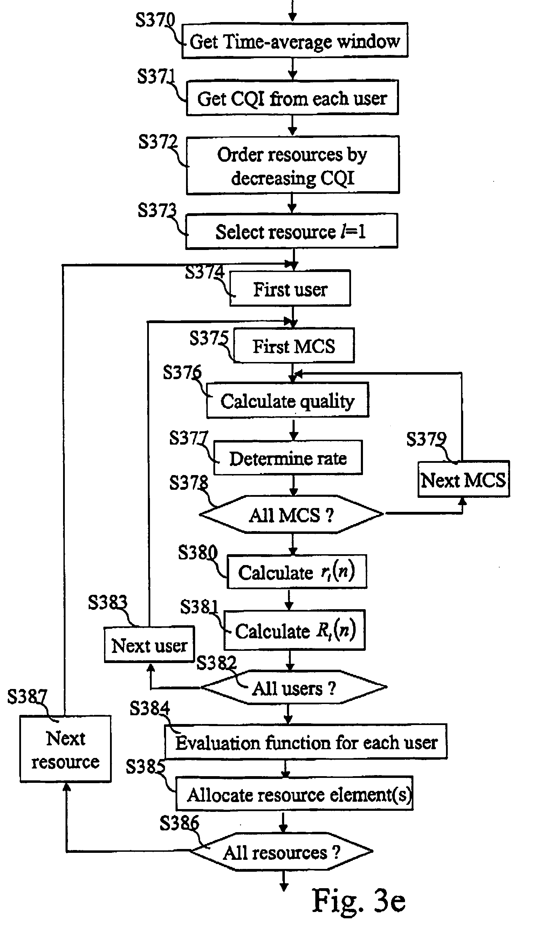

In the communication system, a device for allocating resources 20 allocates the resources of the communication network 50 to at least two users $10_1$ to $10_1$ according to the algorithm as disclosed in the Figs. 3.

The users 10 are as example, mobile phones, personal computers, applications software and so on.

As example and in a non limitative way, the present invention is applicable to a multi-dimensional sharing resource system using a combination of technologies like MIMO (Multiple Input Multiple Output), OFDMA (Orthogonal Frequency Division Multiple Access), CDMA (Code Division Multiple Access), and TDMA (Time Division Multiple Access).

In each time slot, several resource elements like sub-carriers, spreading codes, and antennas can be allocated to users 10. Thus, at a given time slot, at least a given resource element like a given sub-carrier or group of sub-carriers, a given spreading code or group of spreading codes, and a given antenna or group of antennas can be allocated to a user 10; with $i$=1 to $I$.

In the particular context of OFDMA-TDMA system, the number of dimensions is equal to 2 ($K$= 2). The first dimension is the time domain and the second dimension is the frequency domain. Time resource elements are referred to as time slots or Transmission Time Intervals (TTI), and frequency resource elements are referred to as frequency intervals or chunks.

A chunk is composed of at least one sub-carrier.

In that context, the device for allocating resources has to efficiently allocate the frequency resource elements or chunks to the users 10 at each time slot or TTI.

**Fig. 2** is a block diagram of a device for allocating resources according to the present invention.

The device for allocating resources 20 has an architecture based on components connected together by a bus 201 and a processor 200 controlled by the program as disclosed in the Figs. 3.

The bus 201 links the processor 200 to a read only memory ROM 202, a random access memory RAM 203 and an interface 206.

The memory 203 contains registers intended to receive variables and the instructions of the program related to the algorithm as disclosed in the Figs. 3.

The processor 200 controls the operation and the interface 206.

The read only memory 202 contains instructions of the program related to the algorithm as disclosed in the Figs. 3, which is transferred, when the device for allocating resources 20 is powered on, to the random access memory 203.

The interface 206 comprises a Channel Quality Indicator CQI module 207 which memorizes the Channel Quality Indicators CQI transferred by each user $10_i$.

The interface 206 comprises also a target rate module 208 which memorizes the minimum target rates required for each user $10_i$.

The interface 206 comprises also a parameter module 209 which memorizes the parameters determined for each user $10_i$ at time $n$-1.

**Figs. 3a** to **3e** represent an algorithm for allocating resources according to the present invention.

More precisely, the present algorithm is executed by the processor 200 of the device for allocating resources 20.

At step S300 of the **Fig. 3a,** the processor 200 reads the Channel Quality Indicators transferred by each user $10_i$.

A Channel Quality Indicator (CQI) is a measure of the communication quality over the resource elements. CQI can be a value (or values) representing a measure of channel quality on a given resource element. A CQI for a resource element can be computed by making use of performance metrics, such as signal-to-noise ratio (SNR), signal-to-interference plus noise ratio (SINR), signal-to-noise plus distortion ratio (SNDR) and so forth on the resource element. Preferably, each user $10_i$ transfers a CQI for each resource element of the communication system

At next step S301, the processor 200 considers a first user $10_i$,

A next step S302, the processor 200 selects a first modulation and coding scheme to be potentially used by the selected user $10_i$.

At next step S303, the processor 200 determines the equivalent CQI of the communication over all resource elements of the communication network 50 using the selected modulation and coding scheme and the CQI received from the user $10_i$.

At next step S304, the processor 200 determines an information from at least the equivalent channel quality indicator determined at previous step S303. Preferably, the processor 200 determines the bit rate that the selected user $10_i$ can achieve using the selected modulation and coding scheme.

At next step S305, the processor 200 checks if all the possible modulation and coding schemes have been selected for the selected user $10_i$.

If all the possible modulation and coding schemes have been selected for the selected user 10; the processor 200 moves to step S307. Otherwise, the processor 200 moves to step S306, selects another modulation and coding scheme and performs the operations in the loop constituted by the steps S303 to S306.

At step S307, the processor 200 selects the maximum of the information determined at step S304 and determines a time average of the selected information.

According to a particular feature, the information determined at step S307 for the selected user $10_i$ is the maximum of the bit rates determined at step S304 for all selected modulation and coding schemes. The processor 200 calculates then the maximum instantaneous rate $\overline{r_i(n)}$ achieved when all the resources elements are assumed to be allocated to the selected user $10_i$ at the at n-th TTI. Denoting by i the index of $i$-th user $10_i$ and $n$ is the index of n-th time slot or TTI, the maximum of the bit rates determined at step S304 is determined as:

$$\overline{r_i(n)} = \max_{MCS}\left[D_{MCS}\left(1 - BLER_{MCS}\left(\overline{ECQI_i(n)}\right)\right)\right]$$

where $D_{MCS}$ is the transmission rate with modulation and coding scheme MCS, $\overline{ECQI_i(n)}$ is the equivalent or effective CQI over all resource elements for user 10; at TTI $n$, and $BLER_{MCS}$ is the Block Error Rate achieved at input $\overline{ECQI_i(n)}$ with modulation and coding scheme MCS.

At next step S308, the processor 200 determines the time-average $\overline{R_i(n)}$ of maximum instantaneous rate $\overline{r_i(n)}$ over all resource elements for the selected user 10i at n-th TTI. The time-average $\overline{R_i(n)}$ is determined as the average of $r_i(n)$, preferably over a given time window $t_c$, using the following formula:

$$\overline{R_i(n)} = \left(1 - \frac{1}{t_c}\right)\overline{R_i(n-1)} + \frac{1}{t_c}\overline{r_i(n)}$$

Where $n$-1 is the $n$-1-th time slot or TTI.

At next step S309, the processor 200 calculates $\dfrac{\overline{r_i(n)}}{\overline{R_i(n)}}$.

At next step S310, the processor 200 calculates the cumulative ratio $\displaystyle\sum_j \frac{\overline{r_j(n)}}{\overline{R_j(n)}}$ where $j$ =1 to $I$, $I$ being the total number of users 10.

At next step S311, the processor 200 checks if all the users 10 have been selected. If all the users 10 have been selected, the processor 200 moves to step S313. Otherwise, the processor 200 moves to step S312, selects another user $10_i$, returns to step S303 and performs the operations in the loop constituted by the steps S303 to S312.

At step S313, the processor 200 considers a first user $10_i$.

At next step S314, the processor 200 calculates an instantaneous channel priority $c_i(n)$ from $\{\overline{r_i(n)}\}$ and $\{\overline{R_i(n)}\}$ of all users 10 as follows:

$$c_i(n) = \frac{\dfrac{\overline{r_i(n)}}{\overline{R_i(n)}}}{\displaystyle\sum_j \frac{\overline{r_j(n)}}{\overline{R_j(n)}}}$$

At next step S315, the processor 200 checks if all the users 10 have been selected. If all the users 10 have been selected, the processor 200 moves to step S320 of the Fig. 3b. Otherwise, the processor 200 moves to step S316, selects another user $10_i$, returns to step S314 and performs the operations in the loop constituted by the steps S314 to S316.

At step S320 of the Fig. 3b, the processor 200 obtains, for each user $10_i$, the minimum bit rate that should be provided to the user $10_i$.

More precisely, the processor 200 obtains the target minimum rate $R_{min,i}$ from each user 10i with $i$ =1 to $I$.

At next step S321, the processor 200 gets the maximum acceptable traffic delay $d_{max,i}$ for each user $10_i$.

At next step S322, the processor 200 selects a first user $10_i$.

At next step S323, the processor 200 determines the quantity $q_i(n)$ of packets in the buffer assigned to the

user $10_i$ at the n-th TTI.

At next step S324, the processor 200 determines the delay $d_i(n)$ of transfer, at the n-th TTI, of the packets comprised in the buffer assigned to user $10_i$.

At next step S325, the processor 200 determines the percentage $v$ of packets violating the quality of service constraints of user $10_i$, i.e. the percentage of packets transmitted in the previous TTIs and which have been memorized in the buffer assigned to user $10_i$ during a time higher than the maximum acceptable delay $d_{max,i}$.

At next step S326, the processor 200 calculates the quantity:

$$\left(1+v_i(n)\right)\left(\frac{q_i(n)}{R_{min,i}}\right)\left(\frac{1+d_i(n)}{1+d_{max,i}}\right)$$

where $d_{max,i}$ is the maximum acceptable trade delay for the selected user 10i and $R_{min,i}$ is the target minimum rate for the selected user 10i.

At next step S327, the processor 200 cumulates the quantity calculated at step S326 as

$$\sum_j\left(1+v_j(n)\right)\left(\frac{q_j(n)}{R_{min,j}}\right)\left(\frac{1+d_j(n)}{1+d_{max,j}}\right)$$ with $j$=1 to the number of users 10 selected.

At next step S328, the processor 200 checks if all the users 10 have been selected. If all the users 10 have been selected, the processor 200 moves to step S330. Otherwise, the processor 200 moves to step S329, selects another user $10_i$, returns to step S323 and performs the operations in the loop constituted by the steps S323 to S329.

At step S330, the processor 200 considers a first user $10_i$.

At next step S331, the processor 200 calculates the instantaneous service priority $p_i(n)$ from the queue and delay quantities $\{q_i(n)\}$ and $\{d_i(n)\}$ respectively of all users 10 as given below:

$$p_i(n)=\frac{\left(1+v_i(n)\right)\left(\frac{q_i(n)}{R_{min,i}}\right)\left(\frac{1+d_i(n)}{1+d_{max,i}}\right)}{\sum_j\left(1+v_j(n)\right)\left(\frac{q_j(n)}{R_{min,j}}\right)\left(\frac{1+d_j(n)}{1+d_{max,j}}\right)}$$

At next step S315, the processor 200 checks if all the users 10 have been selected. If all the users 10 have been selected, the processor 200 moves to step S340 of the **Fig. 3c.** Otherwise, the processor 200 moves to step S333, selects another user $10_i$, returns to step S331 and performs the operations in the loop constituted by the steps S331 to S333.

At step S340 of the **Fig. 3c,** the processor 200 gets the Time-average window $t_c$ from the ROM 202 in Fig. 2.

At next step S341, the processor 200 gets, from the parameter module 209 in Fig. 2, the users' $\{10_i\}$ time-average service priorities $\{P_i(n-1)\}$ and time-average channel priorities $(C_i(n-1))$ determined at the previous $n$-1-th TTI.

At next step S342, the processor 200 gets the users' $\{10_i\}$ instantaneous service priorities $\{p_i(n)\}$ at TTI $n$ determined at step S331 and the users' $\{10_i\}$ instantaneous channel priorities $\{c_i(n)\}$ determined at TTI $n$ at step S314.

At next step S343, the processor 200 gets, from the parameter module 209 in Fig. 2, the weighting factors $\alpha_i^{(1)}$ $(n$-1), $\alpha_i^{(2)}(n$-1), and $\alpha_i^{(3)}(n$-1) determined at the previous $n$-1-th TTI.

At next step S344, the processor 200 selects a first user $10_i$.

At next step S345, the processor 200 calculates the time-average service priority $P_i(n)$ of the selected user $10_i$ at the $n$-th TTI according to the following formula:

$$P_i(n)=(1-\frac{1}{t_c})P_i(n-1)+\frac{1}{t_c}p_i(n)$$

At next step S346, the processor 200 calculates the time-average channel priority $C_i(n)$ of the selected user

$10_i$ at the $n$-th TTI according to the following formula:

$$C_i(n) = (1 - \frac{1}{t_c})C_i(n-1) + \frac{1}{t_c}c_i(n)$$

At next step S347. the processor 200 calculates the weighting factor $\alpha_i^{(1)}(n)$ at the $n$-th TTI for the selected user $10_i$ using the following formula:

$$\alpha_i^{(1)}(n) = \alpha_i^{(1)}(n-1) + (p_i(n) - P_i(n-1))\alpha_i^{(1)}(n-1)$$

At next step S348, the processor 200 calculates the weighting factor $\alpha_i^{(2)}(n)$ at the n-th TTI for the selected user $10_i$ using the following formula:

$$\alpha_i^{(2)}(n) = \alpha_i^{(2)}(n-1) + (c_i(n) - C_i(n-1))\alpha_i^{(2)}(n-1)$$

At next step S349, the processor 200 calculates the weighting factor $\alpha_i^{(3)}(n)$ at the $n$-th TTI for the selected user $10_i$ using the following formula:

$$\alpha_i^{(3)}(n) = \alpha_i^{(3)}(n-1) + (c_i(n) - C_i(n-1))\alpha_i^{(3)}(n-1)$$

At next step S350, the processor 200 checks if all the users 10 have been selected. If all the users 10 have been selected, the processor 200 moves to step S360 of the Fig. 3d. Otherwise, the processor 200 moves to step S351, selects another user $10_i$, returns to step S345 and performs the operations in the loop constituted by the steps S345 to S351,

At step S360 of the **Fig. 3d**, the processor 200 gets each minimum bit rate $R_{min,i}$ targeted by each user $10_i$.

At next step S361, the processor 200 calculates, for each user $10_i$, a fairness scaling factor $\pi_i$ as:

$$\pi_i = \frac{R_{min,i}}{\sum_j R_{min,j}}$$

At next step S362 the processor 200 gets, from the parameter module 209 in **Fig. 2**, the time-average $\{R_i(n-1)\}$ of users' $\{10_i\}$ allocated instantaneous rate at $n-1$-th TTI.

At next step S363, the processor 200 selects a first user $10_i$.

At next step S364, the processor 200 calculates $\Delta_t = \{R_{min,i} - R_i(n-1)\}$.

At next step S365, the processor 200 checks if each user $10_i$ has been selected. If each user $10_i$ has been selected, the processor 200 moves to step S367. Otherwise, the processor 200 moves to step S366, selects another user $10_i$ and returns to the step S364.

At step S367, the processor 200 checks if all the calculated differences $\Delta_i$ with $i = 1$ to $I$ are strictly negative. If all the calculated differences $\Delta_i$ are strictly negative, the processor 200 moves to step S368. Otherwise, the processor 200 moves to step S369.

At step S368, the processor 200 sets the variable $\delta$ to the value -1. After that, the processor 200 moves to step S370 of the Fig. 3e.

At step S369, the processor 200 sets the variable $\delta$ to the value +1. After that, the processor 200 moves to step S370 of the Fig. 3e.

At step S370 of the **Fig. 3c**, the processor 200 gets the Time-average window $t_c$.

At next step S371, the processor 200 reads the Channel Quality Indicators transferred by each user $10_i$. Preferably, each user $10_1$ to $10_I$ transfers a CQI for each resource element.

At next step S372, the processor 200 orders the resource elements according to their respective maximum CQI values over all users 10 from the highest maximum to the lowest. The resource element which has the highest maximum CQI over the users 10 has an indicia $\ell = 1$ and the resource element which has the lowest maximum CQI over the users 10 has an indicia $\ell = L$, where $L$ is the total number of resource elements.

At next step S373, the processor 200 selects the first ordered resource element $\ell = 1$.

At next step S374, the processor 200 considers a first user $10_i$. Preferably, the first user $10_i$ is that providing the highest maximum CQI for the selected resource element.

A next step S375, the processor 200 selects a first modulation and coding scheme to be potentially used by the selected user $10_i$.

At next step S376, the processor 200 determines the equivalent CQI over the currently selected resource element and all resource elements previously allocated to the selected user $10_i$ using the selected modulation and coding scheme.

At next step S377, the processor 200 determines an information from the equivalent CQI, determined at step S376. Preferably, the processor 200 determines the bit rate that the selected user $10_i$ can have using the selected modulation and coding scheme.

At next step S378, the processor 200 checks if all the possible modulation and coding schemes have been selected for the selected user $10_i$.

If all the possible modulation and coding schemes have been selected for the selected user $10_i$, the processor 200 moves to step S380. Otherwise, the processor 200 moves to step S379, selects another modulation and coding scheme and performs the operations in the loop constituted by the steps S376 to S379.

At step S380, the processor 200 selects the maximum of the information determined at step S377 and determines a time average of the selected information.

According to a particular feature, the information determined at step S380 for the selected user $10_i$ is the maximum of the bit rates determined at step S377 for all selected modulation and coding schemes. The processor 200 calculates then the maximum instantaneous rate $r_i(n)$ achieved when the selected resource element e is allocated to the selected user $10_i$ in addition to the resource elements previously allocated to the selected user 10; at the at $n$-th TTI. Denoting by i the index of $i$-th user $10_i$ and $n$ is the index of n-th time slot or TTI, the maximum of the bit rates determined at step S377 is determined as:

$$r_i(n) = \max_{MCS} \left[ D_{MCS} \left( 1 - BLER_{MCS} \left( ECQI_i(n) \right) \right) \right]$$

where $D_{MCS}$ is the transmission rate with modulation and coding scheme MCS, $ECQI_i(n)$ is the equivalent or effective CQI over the selected resource element $\ell$ and all resource elements previously allocated to the selected user $10_i$ at TTI $n$, and $BLER_{MCS}$ is the Block Error Rate achieved at input $ECQI_i(n)$ with modulation and coding scheme MCS.

At next step S381, the processor 200 determines the time-average $R_i(n)$ of the maximum instantaneous rate $r_i(n)$ over the selected resource element $\ell$ and all resource elements previously allocated to the selected user $10_i$ at $n$-th TTI. The time-average $R_i(n)$ is determined as the average of $r_i(n)$ over a given time window $t_c$ using the following formula:

$$R_i(n) = (1 - \frac{1}{t_c}) R_i(n-1) + \frac{1}{t_c} r_i(n)$$

Where $n$-1 is the $n$-1-th time slot or TTI.

At next step S382, the processor 200 checks if all the users 10 have been selected. If all the users 10 have been selected, the processor 200 moves to step S384. Otherwise, the processor 200 moves to step S383, selects another user $10_i$, returns to step S375 and performs the operations in the loop constituted by the steps S3375 to S382.

At step S384, the processor 200 calculates the value of the utility function for each user $10_i$ according to the following formula:

$$F_i(\ell) = \sum_i \pi_i \left( \alpha_i^{(1)}(n) f_i^{(1)}(n) + \alpha_i^{(2)}(n) f_i^{(2)}(n) + \alpha_i^{(3)}(n) f_i^{(3)}(n) \right) \quad ; \quad a_i(\ell) = 1$$

with:

$$f_i^{(1)}(n) = \delta \, \mathrm{sign}\left(R_{\min,i} - R_i(n-1)\right)\left(\frac{R_i(n) - R_i(n-1)}{R_{\min,i}}\right)$$

$$f_i^{(2)}(n) = \frac{r_i(n)L - \overline{r_i(n)}L_i(n)}{r_i(n)L_i(n)}$$

$$f_i^{(3)}(n) = \frac{r_i(n)L - \overline{R_i(n)}L_i(n)}{R_i(n)L_i(n)}$$

$a_i(\ell)=1$ refers to the assumption that the selected resource element $\ell$ is allocated to user $10_i$, $\alpha_j(\ell) = 0$ for the users $10_j$ with $j \neq i$, $\pi_i$ is the fairness scaling factor for $i$-th user $10_i$ determined in S361.

The first sub-function $f_i^{(1)}(n)$ has the aim of maximising the average system capacity taking into account the users 10 minimum bit rate constraints. The resource elements are allocated in order to maximise the overall variation of the achieved average rates of the users 10 relative to their minimum target rates. Indeed, maximising as much as possible the variation of the average achieved rates results in a maximisation of the system capacity. By dividing this variation by the rate constraint of each user $10_i$ the capacity is maximised with respect to the users 10 rate constraints.

If all the users 10 have their rates higher than their rate constraints (i.e. fairness is temporarily achieved), the scheduler should maximise the system capacity by allocating the resource elements without considering the sign term. This is done through introduction of factor $\delta$ which takes the value -1 if all the users 10 have rates higher than their rate constraints and +1 elsewhere.

The second sub-function $f_i^{(2)}(n)$ represents the variation between the ' instantaneous rate $r_i(n)$ of $i$-th user $10_i$ determined from the qualities of the resource elements currently selected and all the resource elements previously allocated to $i$-th user $10_i$, and the instantaneous rate $\overline{r_i(n)}$ determined from the qualities of overall resource elements and multiplied by the ratio $L_i(n)/L$, relative to the instantaneous rate $\overline{r_i(n)}$ multiplied by $L_i(n)/L$.

$L_i(n)$ is equal to the number of resource elements used for determining $r_i(n)$, i.e. 1 + the number of previously allocated resource elements to user $10_i$, and $L$ is the total number of resource elements.

By maximising the sub-function $f_i^{(2)}(n)$, the resources allocation scheme allocates the resource elements which qualities yield the highest instantaneous bit rate relative to the instantaneous bit rate obtained from the qualities of overall resource elements. Note that the instantaneous bit rate is not only determined from the quality of the resource element currently selected but in addition from the qualities of all resource elements previously allocated to the user 10; at $n$-th TTI.

The sub-function $f_i^{(2)}(n)$ forces the resources allocation scheme to allocate the resource elements which qualities achieve an instantaneous bit rate higher than the bit rate that can be achieved from the qualities of overall resource elements.

The third sub-function $f_i^{(3)}(n)$ represents the variation between the instantaneous bit rate $r_i(n)$ of $i$-th user $10_i$ determined from the qualities of the resource element currently selected and all resource elements previously allocated to $i$-th user $10_i$, and the time-average rate $\overline{R_i(n)}$ multiplied by the ratio $L_i(n)/L$ determined by averaging the instantaneous bit rate $\overline{r_i(n)}$ multiplied by the ratio $L_i(n)/L$ over a given time window, relative to the time-average rate $\overline{R_i(n)}$ multiplied by the ratio $L_i(n)/L$.

The weights $\alpha_i$ of the sub-functions $f_i^{(1)}(n)$, $f_i^{(2)}(n)$ and $f_i^{(3)}(n)$ are specific to each user $10_i$ and depend upon the traffic and application types as well as the required delay and quality of service.

For example, increasing $\alpha_i^{(i)}$ results in prioritising the increase of the average achieved rate and therefore in boosting the trade off to have better fairness at the expense of system capacity reduction.

Weights $\alpha_i$ can be fixed at the beginning of the connection based on the traffic/application type (e.g. $\alpha_i^{(1)} = 1$, $\alpha_i^{(2)} = 0.5$, $\alpha_i^{(3)} = 0.5$).

Weights $\alpha_i$ are later on adapted dynamically to variable traffic constraints as it has been disclosed.

At time slot or TTI $n = 0$, $\alpha_i^{(1)}(0) = 1$, $\alpha_i^{(2)}(0) = 0.5$, $\alpha_i^{(3)}(0) = 0.5$ are the initial values of $\alpha_i^{(1)}$, $\alpha_i^{(2)}$ and $\alpha_i^{(3)}$.

As shown above, $\alpha_i^{(1)}$ increases with the increase of the service priority $p_i(n)$ relative to its smoothed time-average $P_i(n)$, whereas the variation of $\alpha_i^{(2)}$ and $\alpha_i^{(3)}$ is governed by the variation of channel priority $c_i(n)$ with respect to the time-average channel priority $C_i(n)$.

The weights $\alpha_i^{(1)}$, $\alpha_i^{(2)}$, and $\alpha_i^{(3)}$ reflect the degree of fairness of the resources allocation scheme. In other words, $\alpha_i^{(1)}$, $\alpha_i^{(2)}$, and $\alpha_i^{(3)}$ reflect the importance given to the instantaneous rate of each user $10_i$. As someone can notice, the resources allocation scheme gives the priority to the users 10 having the best trade off between the variation of their achieved rates compared to their minimum target rates as given by first utility sub-function $f_i^{(1)}(n)$, the variation between the allocated instantaneous rate and the instantaneous rate averaged over all the resource elements as given by second sub-function $f_i^{(2)}(n)$, and the variation of the instantaneous rate averaged over all the resource elements compared to its time-average rate as given by third utility sub-function $f_i^{(3)}(n)$, all sub-functions then smoothed by user fairness factor $\pi_i$, the latter being the percentage of resource sharing in terms of rate demanded by the user $10_i$.

Note that if the time-average allocated rate $R_i(n\text{-}1)$ at time $n$-1 is higher than the demanded rate $R_{min,i}$, the first sub-function $f_i^{(1)}(n)$ becomes negative and resources are then allocated to the user $10_i$ only if the variation of the instantaneous rates in second and third utility functions are high enough (i.e. the user $10_i$ has better channel conditions than before).

At next step S385, the processor 200 allocates the selected resource $\ell$ to the user $10_i$ of which the value of the utility function is the highest.

At next step S386, the processor 200 checks if each resource has been selected. If each resource has been selected, the processor 200 returns to step S300 of the Fig. 3a. Otherwise, the processor 200 moves to step S387, selects the next resource element and returns to the step S374.

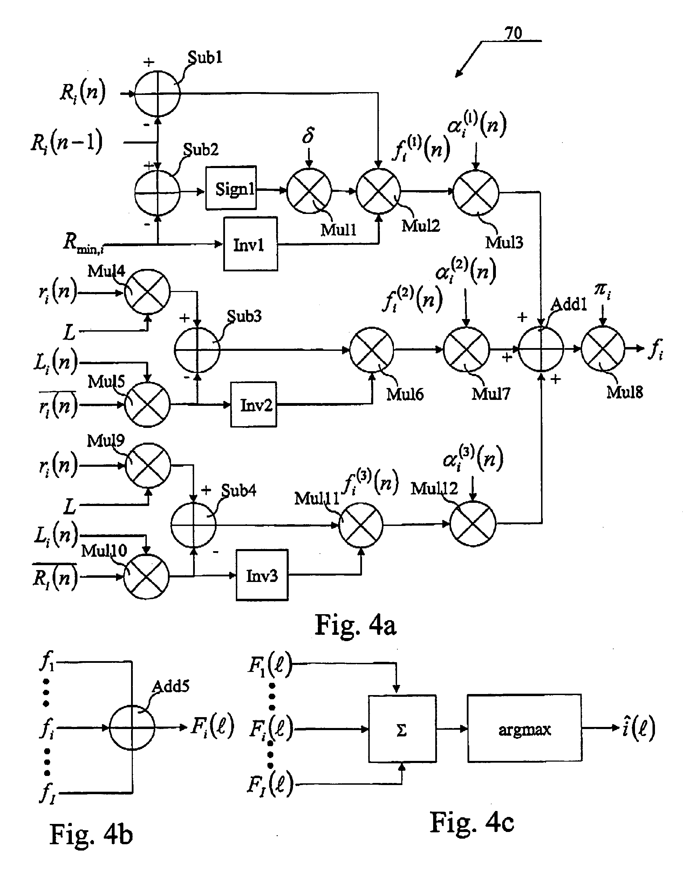

Fig. **4a** to **4c** represent block diagrams of the device for allocating resources when it is implemented into the form of a dedicated integrated circuit.

The integrated circuit 70 comprises a subtraction module Sub1 which subtracts the time-average $R_i(n\text{-}1)$ of allocated instantaneous rate for $i$-th user $10_i$ at $n$-1-th TTI to the time-average $R_i(n)$ of allocated instantaneous rate $r_i(n)$ for $i$-th user $10_i$ at $n$-th TTI.

The integrated circuit 70 comprises a subtraction module Sub2 which subtracts the minimum bit rate $R_{min,i}$ targeted by $i$-th user $10_i$ to the time-average $R_i(n\text{-}1)$ of allocated instantaneous rate for $i$-th user 10; at $n$-1-th TTI.

The integrated circuit 70 comprises a sign detector Signl which detects the sign of the output of the subtraction module Sub2 and a multiplier Mull which multiplies the output of the sign detector Signl by the coefficient $\delta$.

The integrated circuit 70 comprises an inverse function module Inv1 which inverses the minimum bit rate $R_{min,i}$ targeted by $i$-th user $10_i$.

The integrated circuit 70 comprises a multiplier Mul2 which multiplies the output of the subtraction module Sub1, the output of the multiplier Mul1 and the output of the inverse function module Invl.

The integrated circuit 70 comprises a multiplier Mul3 which multiplies the output of the multiplier Mul2 by the weight $\alpha_i^{(1)}; (n)$.

The integrated circuit 70 comprises a multiplier Mul4 which multiplies the allocated instantaneous rate $r_i(n)$ for $i$-th user $10_i$ at $n$-th TTI by the total number $L$ of resources.

The integrated circuit 70 comprises a multiplier Mul5 which multiplies the number $L_i(n)$ of resources used for determining $r_i(n)$ by the maximum instantaneous rate $\overline{r_i(n)}$ achieved when all resource units are allocated to $i$-th user $10_i$ at $n$-th TTI.

The integrated circuit 70 comprises a subtraction module Sub3 which subtracts the output of the multiplier Mul5 from the output of the multiplier Mul4.

The integrated circuit 70 comprises an inverse function module Inv2 which inverses the output of the multiplier Mul5.

The integrated circuit 70 comprises a multiplier Mul6 which multiplies the output of the subtraction module Sub3 by the output of the inverse function module Inv2.

The integrated circuit 70 comprises a multiplier Mul7 which multiplies the output of the multiplier Mul6 by the weight $\alpha_i(2) (n)$.

The integrated circuit 70 comprises a multiplier Mul9 which multiplies the allocated instantaneous rate $r_i(n)$ for $i$-th user $10_i$ at $n$-th TTI by $L$.

The integrated circuit 70 comprises a multiplier Mul10 which multiplies the time-average $\overline{R_i(n)}$ by $L_i(n)$.

The integrated circuit 70 comprises a subtraction module Sub4 which subtracts the output of the multiplier Mul10 from the output of the multiplier Mul9.

The integrated circuit 70 comprises an inverse function module Inv3 which inverses the output of the multiplier Mul10.

The integrated circuit 70 comprises a multiplier Mul11 which multiplies the output of the subtraction module Sub4 by the output of the inverse function module Inv3.

The integrated circuit 70 comprises a multiplier Mul12 which multiplies the output of the multiplier Mul11 by the weight $\alpha_i^{(3)} (n)$.

The integrated circuit 70 comprises an adder Addl which sums the outputs of the multipliers Mul3, Mul7 and Mul12.

The integrated circuit 70 comprises a multiplier Mul8 which multiplies the output of the adder Add 1 by $\pi$, and forms a function $f_i$ for each user $10_i$.

In the **Fig. 4b,** the integrated circuit 70 comprises an adder Add5 which sums the functions $f_i$ with $i$ =1 to $I$ and forms a function $F_i(\ell)$ for resource element $\ell$.

In the **Fig. 4c**, the integrated circuit 70 comprises a multiplexer E which groups the functions $F_i(\ell)$ with $i$ =1 to $I$ and a selection circuit which selects the user $\hat{i}(\ell)$ having the highest function $F_i(\ell)$ among all users 10.

This corresponds to apply the following formula:

$$\hat{i}(\ell) = \arg\max_i F_i(\ell)$$

Where $\hat{i}(\ell)$ is the selected user $10_i$ for $\ell$-th resource element.

In another mode of realisation, the information stemmed from the equivalent CQI in steps S304 and S377 is a variation of CQI between consecutive resource elements for the same TTI.

According to that mode of realization, the maximization of the utility function for the $\ell$-th resource element can be transformed into the maximization of the variation of the utility function between iteration (resource element) $\ell$ and previous iteration $\ell$-1. This can be written as:

$$\hat{i}(\ell) = \arg\max_i F_i(\ell) \longleftrightarrow \hat{i}(\ell) = \arg\max_i \left( \underbrace{F_i(\ell) - F_i(\ell-1)}_{\Delta F_i(\ell)} \right)$$

The variation $\Delta F_i(\ell)$ can then be transformed into a variation of the users' instantaneous bit rates which in turn can then be transformed into a variation of CQIs between successive resource elements allocation. An example of a method allowing for this transformation can be the use of Taylor series development. Thus, after transformation, the resources allocation scheme relies on the maximization of a function of the variations of CQIs as shown hereafter:

$$\hat{i}(\ell) = \arg\max_i G_i(\Delta CQI_i(\ell))$$

By doing so, the resources allocation scheme decides on the resource elements allocation by processing the input CQI values while avoiding the complex task of systematic evaluation of the users' instantaneous rates.

According to that mode of realisation, for each resource element, a new equivalent utility function $G_i$ is evaluated for each user $10_i$ using as inputs the variations of its CQI values. The resource element $\ell$ is then allocated to the user maximizing the utility function. There is no need to evaluate the users' instantaneous rates during the resources allocation scheme.

The resources allocation scheme uses only the CQI on each resource element and on the previous resource elements allocated to the user. There is no need to evaluate the equivalent channel quality for the purpose of bit rate assessment. This dramatically reduces the complexity of resources allocation scheme.

It has to be noted here that, in the case of three dimensions sharing system, a fourth sub-function is considered. This fourth sub-function consists in maximising the variation between the instantaneous rate and the instantaneous rate averaged over all the resources of the third dimension and the direct upper dimension (i.e. second dimension). In general, the number of sub-functions is equal to the number of dimensions in the system plus one.

**Claims**

1. Method for allocating resources of a system to at least two users ($10_1$, $10_I$), the resources of the system being decomposed into resource elements, wherein the method comprises the steps of:

    - obtaining (S320), for each user, the minimum bit rate that should be provided to the user,
    - obtaining channel quality indicators (S371) from each user for at least a part of the resource elements, and **characterized by** comprising the steps of:
    - determining (S380), for each user, an information from at least one channel quality indicator,

- determining, (S381) for each user, a time average of the information,
- determining (S380), for each user, the maximum instantaneous rate when all the resources elements are assumed to be allocated to the user,
- determining (S381), for each user, the time average of the maximum instantaneous rate when all the resources elements are assumed to be allocated to the user,
- allocating (S384) resource elements to users according to the optimization of a utility function taking into account the minimum bit rates, the information obtained from at least one channel quality indicator, the time averages of the information, the maximum instantaneous rates when all resource elements are assumed to be allocated to the user and the time average of the maximum instantaneous rate determined for the user.

2. Method according to claim 1, **characterized in that** the system resources are multi dimensional.

3. Method according to claim 1 or 2, **characterised in that** the utility function is composed of at least three sub functions $f_i^{(1)}(n)$, $f_i^{(2)}(n)$, and $f_i^{(3)}(n)$, a first sub function $f_i^{(1)}(n)$ prioritizing the users having the best trade off between variation of the time-average of the bit rate at previous and a current transmission time intervals compared to the minimum bit rate that should be provided to the user, a second sub function $f_i^{(2)}(n)$ prioritizing the users having the highest variation between the bit rate the user can achieve at the current time interval and the instantaneous rate achieved when all resource elements are assumed to be allocated to the user and a third function $f_i^{(3)}(n)$ prioritizing the users having the highest variation between the bit rate the user can achieve at the current time interval and the time average of the instantaneous rate achieved when all resource elements are assumed to be allocated to the user.

4. Method according to claim 3, **characterized in that** each of the at least three sub functions $f_i^{(3)}(n)$ is further multiplied by a respective factor $\alpha_i^{(1)}(n)$, $\alpha i^{(2)}(n)$, and $\alpha_i^{(3)}(n)$, the factors being updated at each time interval.

5. Method according to claim 1 or 2, **characterized in that** the information from at least one channel quality indicator is determined according to the following formula:

$$\hat{i}(\ell) = \arg\max_i F_i(\ell) \longleftrightarrow \hat{i}(\ell) = \arg\max_i \left( \underbrace{F_i(\ell) - F_i(\ell-1)}_{\Delta F_i(\ell)} \right)$$

where $\hat{i}(\ell)$ is the selected user $10_i$ for $\ell$-th resource element $F_i(\ell)$ is a function for resource element $\ell$.

6. Method according to claim 3 or 4, **characterized in that** the information from at least one channel quality indicator is the bit rate the user can achieve which is determined considering the channel quality indicators obtained from the user for at least a part of the resource elements.

7. Method according to claim 6, **characterized in that** the system resources are bi dimensional and **in that** the resource elements are sub-carriers or spreading codes or antennas which are allocated at a time slot.

8. Method according to claim 6 or 7, **characterized in that** the bit rate the user can achieve is further determined by selecting the maximum bit rate the user can achieve among different bit rates determined according to different modulation and coding schemes.

9. Method according to any of the claims 3 to 8, **characterised in that** the three sub functions $f_i^{(1)}(n)$, $f_i^{(2)}(n)$, and $f_i^{(3)}(n)$ are determined according to the following formulas :

$$f_i^{(1)}(n) = \delta \, \text{sign}\left(R_{\text{min},i} - R_i(n-1)\right) \left( \frac{R_i(n) - R_i(n-1)}{R_{\text{min},i}} \right)$$

$$f_i^{(2)}(n) = \frac{r_i(n)L - \overline{r_i(n)}L_i(n)}{\overline{r_i(n)}L_i(n)}$$

$$f_i^{(3)}(n) = \frac{r_i(n)L - \overline{R_i(n)}L_i(n)}{\overline{R_i(n)}L_i(n)}$$

where $i$ identifies the user, $n$ identifies the current transmission time interval, $n$-1 identifies the previous transmission time interval, $\delta$ is equal to the value one or minus one, $R_{\min,i}$ is the minimum bit rate that should be provided to the user, $R_i(x)$ is the time-average at the transmission time interval x of the bit rate $r_i(x)$ the user can achieve at the transmission time interval x, $L$ is the number of resource elements, $L_i(n)$ is equal to the number of resource elements used for determining $r_i(n)$, $\overline{r_i(n)}$ is the maximum instantaneous rate achieved when all the resources elements are assumed to be allocated to the user at the current transmission time interval and $\overline{R_i(n)}$ is the time-average of maximum instantaneous rate $\overline{r_i(n)}$.

**10.** Method according to claim 9, **characterised in that** the method comprises further step of calculating, for each user :

$\Delta_i = (R_{\min,i} - R_i(n-1))$ with $i = 1$ to the total number of users $I$,
and **in that** if each calculated difference $\Delta_i$ is strictly negative, $\delta$ is equal to -1.

**11.** Method according to claim 9 or 10, **characterised in that** the method comprises further step of calculating for each user, an instantaneous channel priority $c_i(n)$ according to the following formula :

$$c_i(n) = \frac{\dfrac{\overline{r_i(n)}}{\overline{R_i(n)}}}{\sum_j \dfrac{\overline{r_j(n)}}{\overline{R_j(n)}}}.$$

**12.** Method according to any of the claims 9 to 11, **characterised in that** the method comprises further steps of :

- obtaining, for each user, the maximum acceptable traffic delay $d_{\max,i}$,
- determining, for each user, the quantity $q_i(n)$ of packets in the buffer assigned to the user,
- determining, for each user, the delay $d_i(n)$ of transfer of the packets comprised in the buffer assigned to the user,
- determining, for each user, the percentage $v$ of packets violating the quality of service constraints of the user,
- calculating, for each user, an instantaneous service priority $p_i(n)$ according to the following formula:

$$p_i(n) = \frac{(1 + v_i(n))\left(\dfrac{q_i(n)}{R_{\min,i}}\right)\left(\dfrac{1 + d_i(n)}{1 + d_{\max,i}}\right)}{\sum_j (1 + v_j(n))\left(\dfrac{q_j(n)}{R_{\min,j}}\right)\left(\dfrac{1 + d_j(n)}{1 + d_{\max,j}}\right)}.$$

- calculating, for a each user, a time-average service priority $P_i(n)$ according to the following formula:

$$P_i(n) = (1 - \frac{1}{t_c})P_i(n-1) + \frac{1}{t_c}p_i(n),$$

where $t_c$ is a time duration,

- calculating, for each user, a time-average channel priority $C_i(n)$ according to the following formula:

$$C_i(n) = (1 - \frac{1}{t_c})C_i(n-1) + \frac{1}{t_c}c_i(n).$$

**13.** Method according to any of the claims 9 to 12, **characterised in that** each sub function $f_i^{(1)}(n)$, $f_i^{(2)}(n)$, and $f_i^{(3)}(n)$, is further weighted by a respective factor $\alpha_i^{(1)}(n)$, $\alpha_i^{(2)}(n)$, and $\alpha_i^{(3)}(n)$, determined according to the following formulas:

$$\alpha_i^{(1)}(n) = \alpha_i^{(1)}(n-1) + (p_i(n) - P_i(n-1))\alpha_i^{(1)}(n-1)$$

$$\alpha_i^{(2)}(n) = \alpha_i^{(2)}(n-1) + (c_i(n) - C_i(n-1))\alpha_i^{(2)}(n-1)$$

$$\alpha_i^{(3)}(n) = \alpha_i^{(3)}(n-1) + (c_i(n) - C_i(n-1))\alpha_i^{(3)}(n-1).$$

**14.** Method according to claim 13, **characterised in that** the weighted sub functions are summed and the sum is multiplied by a fairness scaling factor $\pi_i$ as:

$$\pi_i = \frac{R_{min,i}}{\sum_j R_{min,j}}.$$

**15.** Device for allocating resources of a system to at least two users ($10_1$, $10_I$), the resources of the system being decomposed into resource elements, wherein the device for allocating resources comprises:

- means (200, 206) for obtaining, for each user, the minimum bit rate that should be provided to the user,
- means (200, 206) for obtaining channel quality indicators from each user for at least a part of the resource elements, and **characterized by** comprising :
- means (200) for determining, for each user, an information from at least one channel quality indicator;
- means (200) for determining, for each user, a time average of the information,
- means (200) for determining, for each user, the maximum instantaneous rate when all the resources elements are assumed to be allocated to the user,
- means (200) for determining, for each user, the time average of the maximum instantaneous rate when all the resources elements are assumed to be allocated to the user,
- means (200) for allocating resource elements to users according to the optimization of a utility function taking into account the minimum bit rates, the information obtained from at least one channel quality indicator, the time averages of the information, the maximum instantaneous rates when all resource elements are assumed to be allocated to the user and the time average of the maximum instantaneous rate determined for the user.

**16.** Computer program which can be directly loadable into a programmable device, comprising instructions or portions of code for implementing the steps of the method according to claims 1 to 14, when said computer program is executed on a programmable device.

**Patentansprüche**

1. Verfahren zum Zuteilen von Ressourcen eines Systems zu wenigstens zwei Nutzern ($10_1$, $10_I$), wobei die Ressourcen des Systems in Ressourcenelemente zerlegt sind, wobei das Verfahren die folgenden Schritte aufweist:

   - Erhalten (S320) der minimalen Bitrate, die dem Nutzer zur Verfügung gestellt werden sollte, für jeden Nutzer, und **dadurch gekennzeichnet ist, dass** es die folgenden Schritte aufweist:
   - Bestimmen (S380) einer Information aus wenigstens einem Kanalqualitätsindikator für jeden Nutzer,
   - Bestimmen (S381) eines Zeitdurchschnitts der Information für jeden Nutzer,
   - Bestimmen (S380) der maximalen momentanen Rate, wenn angenommen wird, dass dem Nutzer alle Ressourcenelemente zugeteilt sind, für jeden Nutzer,
   - Bestimmen (S381) des Zeitdurchschnitts der maximalen momentanen Rate, wenn angenommen wird, dass dem Nutzer alle Ressourcenelemente zugeteilt sind, für jeden Nutzer,
   - Zuteilen (S384) von Ressourcenelementen zu Nutzern gemäß der Optimierung einer Nutzenfunktion unter Berücksichtigung der minimalen Bitraten, der aus wenigstens einem Kanalqualitätsindikator erhaltenen Information, der Zeitdurchschnitte der Information, der maximalen momentanen Raten, wenn angenommen wird, dass dem Nutzer alle Ressourcenelemente zugeteilt sind, und des für den Nutzer bestimmten Zeitdurchschnitts der maximalen momentanen Rate.

2. Verfahren nach Anspruch 1, **dadurch gekennzeichnet, dass** die Systemressourcen mehrdimensional sind.

3. Verfahren nach Anspruch 1 oder 2, **dadurch gekennzeichnet, dass** die Nutzenfunktion aus wenigstens drei Unterfunktionen $f_i^{(1)}(n)$, $f_i^{(2)}(n)$ und $f_i^{(3)}(n)$ zusammengesetzt ist, wobei eine erste Unterfunktion $f_i^{(1)}(n)$ den Nutzern mit der besten Abstimmung zwischen einer Variation des Zeitdurchschnitts der Bitrate bei einem vorherigen und einem aktuellen Übertragungszeitintervall im Vergleich mit der minimalen Bitrate, die dem Nutzer zur Verfügung gestellt werden sollte, den Vorrang gibt, wobei eine zweite Unterfunktion $f_i^{(2)}(n)$ den Nutzern mit der höchsten Variation zwischen der Bitrate, die der Nutzer bei dem aktuellen Zeitintervall erreichen kann, und der erreichten momentanen Rate, wenn angenommen wird, dass dem Nutzer alle Ressourcenelemente zugeteilt sind, den Vorrang gibt, und wobei eine dritte Funktion $f_i^{(3)}(n)$ den Nutzern mit der höchsten Variation zwischen der Bitrate, die der Nutzer bei dem aktuellen Zeitintervall erreichen kann, und dem Zeitdurchschnitt der erreichten momentanen Rate, wenn angenommen wird, dass dem Nutzer alle Ressourcenelemente zugeteilt sind, den Vorrang gibt.

4. Verfahren nach Anspruch 3, **dadurch gekennzeichnet, dass** jede der wenigstens drei Unterfunktionen $f_i^{(3)}(n)$ weiterhin mit einem jeweiligen Faktor $\alpha_i^{(1)}(n)$, $\alpha_i^{(2)}(n)$ und $\alpha_i^{(3)}(n)$ multipliziert wird, wobei die Faktoren bei jedem Zeitintervall aktualisiert werden.

5. Verfahren nach Anspruch 1 oder 2, **dadurch gekennzeichnet, dass** die Information aus wenigstens einem Kanalqualitätsindikator gemäß der folgenden Formel bestimmt wird:

$$\hat{i}(\ell) = \arg\max_i F_i(\ell) \longleftrightarrow \hat{i}(\ell) = \arg\max_i \left( \underbrace{F_i(\ell) - F_i(\ell-1)}_{\Delta F_i(\ell)} \right)$$

wobei $\hat{i}(\ell)$ der ausgewählte Nutzer $10_i$ für das $\ell$-te Ressourcenelement ist und $F_i(\ell)$ eine Funktion für das Ressourcenelement $\ell$ ist.

6. Verfahren nach Anspruch 3 oder 4, **dadurch gekennzeichnet, dass** die Information aus wenigstens einem Kanalqualitätsindikator die Bitrate ist, die der Nutzer erreichen kann, welche unter Berücksichtigung der von dem Nutzer für wenigstens einen Teil der Ressourcenelemente erhaltenen Kanalqualitätsindikatoren bestimmt ist.

7. Verfahren nach Anspruch 6, **dadurch gekennzeichnet, dass** die Systemressourcen zweidimensional sind und dass die Ressourcenelemente Hilfsträger oder Spreizcodes oder Antennen sind, die bei einem Zeitschlitz zugeteilt sind.

**8.** Verfahren nach Anspruch 6 oder 7, **dadurch gekennzeichnet, dass** die Bitrate, die der Nutzer erreichen kann, weiterhin durch Auswählen der maximalen Bitrate, die der Nutzer erreichen kann, unter gemäß unterschiedlichen Modulations- und Codierschemen bestimmten unterschiedlichen Bitraten bestimmt wird.

**9.** Verfahren nach einem der Ansprüche 3 bis 8, **dadurch gekennzeichnet, dass** die drei Unterfunktionen $f_i^{(1)}(n)$, $f_i^{(2)}(n)$ und $f_i^{(3)}(n)$ gemäß den folgenden Formeln bestimmt werden:

$$f_i^{(1)}(n) = \delta sign(R_{\min,i} - R_i(n-1))\left( \frac{R_i(n) - R_i(n-1)}{R_{\min,i}} \right)$$

$$f_i^{(2)}(n) = \frac{r_i(n)L - \overline{r_i(n)}L_i(n)}{\overline{r_i(n)}L_i(n)}$$

$$f_i^{(3)}(n) = \frac{r_i(n)L - \overline{R_i(n)}L_i(n)}{\overline{R_i(n)}L_i(n)}$$

wobei i den Nutzer identifiziert, n das aktuelle Übertragungszeitintervall identifiziert, n-1 das vorherige Übertragungszeitintervall identifiziert, $\delta$ gleich dem Wert eins oder minus eins ist, $R_{\min,i}$ die minimale Bitrate ist, die dem Nutzer zur Verfügung gestellt werden sollte, $R_i(x)$ der Zeitdurchschnitt bei dem Übertragungszeitintervall x der Bitrate $r_i(x)$ ist, die der Nutzer bei dem Übertragungszeitintervall x erreichen kann, L die Anzahl von Ressourcenelementen ist, $L_i(n)$ gleich der Anzahl von zum Bestimmen von $r_i(n)$ verwendeten Ressourcenelementen ist, $\overline{r_i(n)}$ die erreichte maximale momentane Rate ist, wenn angenommen wird, dass bei dem aktuellen Übertragungszeitintervall dem Nutzer alle Ressourcenelemente zugeteilt sind, und $\overline{R_i(n)}$ der Zeitdurchschnitt der maximalen momentanen Rate $\overline{r_i(n)}$ ist.

**10.** Verfahren nach Anspruch 9, **dadurch gekennzeichnet, dass** das Verfahren weiterhin den Schritt zum Berechnen von
$\Delta_i (R_{\min,i} - R_i(n-1))$ für jeden Nutzer aufweist, wobei i = 1 bis Gesamtanzahl von Nutzern I gilt,
und dass dann, wenn eine jeweilige berechnete Differenz $\Delta_i$ streng negativ ist, $\delta$ gleich -1 ist.

**11.** Verfahren nach Anspruch 9 oder 10, **dadurch gekennzeichnet, dass** das Verfahren weiterhin den Schritt zum Berechnen einer momentanen Kanalpriorität $c_i(n)$ für jeden Nutzer gemäß der folgenden Formel aufweist:

$$c_i(n) = \frac{\dfrac{\overline{r_i(n)}}{\overline{R_i(n)}}}{\sum_j \dfrac{\overline{r_j(n)}}{\overline{R_j(n)}}}$$

**12.** Verfahren nach einem der Ansprüche 9 bis 11, **dadurch gekennzeichnet, dass** das Verfahren weiterhin die folgenden Schritte aufweist:

- Erhalten der maximalen akzeptierbaren Verkehrsverzögerung $d_{max,i}$ für jeden Nutzer,
- Bestimmen der Menge $q_i(n)$ von Paketen in dem dem Nutzer zugeordneten Puffer für jeden Nutzer,
- Bestimmen der Verzögerung $d_i(n)$ eines Transfers der in dem dem Nutzer zugeordneten Puffer umfassten Pakete für jeden Nutzer,
- Bestimmen des Prozentsatzes $v$ von Paketen, die die Dienstqualitätsbeschränkungen des Nutzers verletzen, für jeden Nutzer,
- Berechnen einer momentanen Dienstpriorität $p_i(n)$ für jeden Nutzer gemäß der folgenden Formel:

$$p_i(n) = \frac{(1 + v_i(n))\left(\dfrac{q_i(n)}{R_{min,i}}\right)\left(\dfrac{1 + d_i(n)}{1 + d_{max,i}}\right)}{\sum_j (1 + v_j(n))\left(\dfrac{q_j(n)}{R_{min\,j}}\right)\left(\dfrac{1 + d_j(n)}{1 + d_{max,j}}\right)}$$

- Berechnen einer Zeitdurchschnitts-Dienstpriorität $P_i(n)$ für jeden Nutzer gemäß der folgenden Formel:

$$P_i(n) = (1 - \frac{1}{t_c})P_i(n-1) + \frac{1}{t_c}p_i(n),$$

wobei $t_c$ eine Zeitdauer ist,
- Berechnen einer Zeitdurchschnitts-Kanalpriorität $C_i(n)$ für jeden Nutzer gemäß der folgenden Formel:

$$C_i(n) = (1 - \frac{1}{t_c})C_i(n-1) + \frac{1}{t_c}c_i(n).$$

13. Verfahren nach einem der Ansprüche 9 bis 12, **dadurch gekennzeichnet, dass** jede Unterfunktion $f_i^{(1)}(n)$, $f_i^{(2)}(n)$ und $f_i^{(3)}(n)$ weiterhin durch einen jeweiligen Faktor $\alpha_i^{(1)}(n)$, $\alpha_i^{(2)}(n)$ und $\alpha_i^{(3)}(n)$ gewichtet wird, der gemäß folgenden Formeln bestimmt wird:

$$\alpha_i^{(1)}(n) = \alpha_i^{(1)}(n-1) + (p_i(n) - P_i(n-1))\alpha_i^{(1)}(n-1)$$

$$\alpha_i^{(2)}(n) = \alpha_i^{(2)}(n-1) + (c_i(n) - C_i(n-1))\alpha_i^{(2)}(n-1)$$

$$\alpha_i^{(3)}(n) = \alpha_i^{(3)}(n-1) + (c_i(n) - C_i(n-1))\alpha_i^{(3)}(n-1).$$

14. Verfahren nach Anspruch 13, **dadurch gekennzeichnet, dass** die gewichteten Unterfunktionen summiert werden und die Summe mit einem Gerechtigkeits-Skalierungsfaktor $\pi_i$ wie

$$\pi_i = \frac{R_{min,i}}{\sum_j R_{min,j}}$$

multipliziert wird.

**15.** Vorrichtung zum Zuteilen von Ressourcen zu wenigstens zwei Nutzern ($10_1$, $10_l$), wobei die Ressourcen des Systems in Ressourcenelemente zerlegt sind, wobei die Vorrichtung folgendes aufweist:

- Mittel (200, 206) zum Erhalten der minimalen Bitrate für jeden Nutzer, die dem Nutzer zur Verfügung gestellt werden sollte,
- Mittel (200, 206) zum Erhalten von Kanalqualitätsindikatoren von jedem Nutzer für wenigstens einen Teil der Ressourcenelemente, und **dadurch gekennzeichnet ist, dass** sie folgendes aufweist:
- Mittel (200) zum Bestimmen einer Information aus wenigstens einem Kanalqualitätsindikator für jeden Nutzer,
- Mittel (200) zum Bestimmen eines Zeitdurchschnitts der Information für jeden Nutzer,
- Mittel (200) zum Bestimmen der maximalen momentanen Rate, wenn angenommen wird, dass dem Nutzer alle Ressourcenelemente zugeteilt sind, für jeden Nutzer,
- Mittel (200) zum Zuteilen von Ressourcenelementen zu Nutzern gemäß der Optimierung einer Nutzenfunktion unter Berücksichtigung der minimalen Bitraten, der aus wenigstens einem Kanalqualitätsindikator erhaltenen Information, der Zeitdurchschnitte der Information, der maximalen momentanen Raten, wenn angenommen wird, dass dem Nutzer alle Ressourcenelemente zugeteilt sind, und des für den Nutzer bestimmten Zeitdurchschnitts der maximalen momentanen Rate.

**16.** Computerprogramm, das direkt ladbar in eine programmierbare Vorrichtung sein kann, mit Anweisungen oder Teilbereichen eines Codes zum Implementieren der Schritte des Verfahrens nach den Ansprüchen 1 bis 14, wenn das Computerprogramm auf einer programmierbaren Vorrichtung ausgeführt wird.

**Revendications**

**1.** Méthode d'allocation de ressources d'un système à au moins deux utilisateurs ($10_1$, $10_l$), les ressources du système étant décomposées en éléments de ressources, la méthode comportant les étapes :

- d'obtention (S320), pour chaque utilisateur, du débit minimum qui devrait être fourni à l'utilisateur,
- d'obtention d'indicateurs de qualité de canal (S371) pour chaque utilisateur pour au moins une partie des éléments de ressources, et **caractérisée en ce qu'**elle comporte les étapes :
- de détermination (S380), pour chaque utilisateur, d'une information à partir d'au moins un indicateur de canal,
- de détermination (S381), pour chaque utilisateur, d'une moyenne temporelle de l'information,
- de détermination (S380), pour chaque utilisateur, du débit maximum instantané lorsque tous les éléments de ressources sont supposés être alloués à l'utilisateur,
- de détermination (S381), pour chaque utilisateur, d'une moyenne temporelle du débit maximum instantané lorsque tous les éléments de ressources sont supposés être alloués à l'utilisateur,
- d'allocation (S384) d'éléments de ressources aux utilisateurs en fonction de l'optimisation d'un fonction d'utilité prenant en compte les débits minimum, les moyennes temporelles des informations, des débits maximum instantanés lorsque tous les éléments de ressources sont supposés être alloués à l'utilisateur et des moyennes temporelles des débits maximum instantanés lorsque tous les éléments de ressources sont supposés être alloués à l'utilisateur.

**2.** Méthode selon la revendication 1, **caractérisée en ce que** les ressources du système sont multi dimension.

**3.** Méthode selon la revendication 1 ou 2, **caractérisée en ce que** la fonction d'utilité est décomposée en au moins trois sous fonctions $f_i^{(1)}(n)$, $f_i^{(2)}(n)$, et $f_i^{(3)}(n)$, une première sous fonction $f_i^{(1)}(n)$ donnant un ordre de priorité aux utilisateurs ayant le meilleur compromis entre la variation de la moyenne temporelle du débit à des intervalles de temps précédents et courant comparé au débit minimum qui devrait être fourni à l'utilisateur, une seconde sous fonction $f_i^{(2)}(n)$ donnant un ordre de priorité aux utilisateurs ayant la variation la plus importante entre le débit que l'utilisateur peut atteindre à l'intervalle de temps courant et le débit instantané atteint lorsque tous les éléments de ressources sont supposés être alloués à l'utilisateur et une troisième sous fonction $f_i^{(3)}(n)$ donnant un ordre de priorité aux utilisateurs ayant la variation la plus importante entre le débit que l'utilisateur peut atteindre à l'intervalle de temps courant et la moyenne temporelle du débit instantané atteint lorsque tous les éléments de ressources sont supposés être alloués à l'utilisateur.

**4.** Méthode selon la revendication 3, **caractérisée en ce que** chacune des au moins trois sous fonctions $f_i^{(3)}(n)$ est en outre multipliée par un facteur $\alpha_i^{(1)}$, $\alpha_i^{(2)}(n)$, et $\alpha_i^{(3)}(n)$, les facteurs étant mis à jour à chaque intervalle de temps.

**5.** Méthode selon la revendication 1 ou 2, **caractérisée en ce que** l'information à partir d'au moins un indicateur de canal est déterminée selon la formule suivante :

$$\hat{i}(\ell) = \arg\max_i F_i(\ell) \longleftrightarrow \hat{i}(\ell) = \arg\max_i \left( \underbrace{F_i(\ell) - F_i(\ell-1)}_{\Delta F_i(\ell)} \right)$$

où $\hat{i}(\ell)$ est l'utilisateur sélectionné $10_i$ pour le $\ell$-ième élément de ressources et $F_i(\ell)$ est une fonction pour l'élément de ressources $\ell$.

**6.** Méthode selon la revendication 3 ou 4, **caractérisée en ce que** l'information à partir d'au moins un indicateur de canal est le débit que l'utilisateur peut atteindre, déterminé en considérant les indicateurs de qualité de canal obtenus de l'utilisateur pour au moins une partie des éléments de ressources.

**7.** Méthode selon la revendication 6, **caractérisée en ce que** les ressources du système sont à deux dimensions et **en ce que** les éléments de ressources sont des sous porteuses ou des codes d'étalement ou des antennes qui sont alloués à un intervalle de temps.

**8.** Méthode selon la revendication 6 ou 7, **caractérisée en ce que** le débit que l'utilisateur peut atteindre est en outre déterminé en sélectionnant le débit maximum que l'utilisateur peut atteindre parmi différents débits déterminés en fonction de différentes méthodes de modulation et de codage.

**9.** Méthode selon l'une quelconque des revendications 3 à 8, **caractérisée en ce que** les trois sous fonctions $f_i^{(1)}(n)$, $f_i^{(2)}(n)$, et $f_i^{(3)}(n)$ sont déterminées selon les formules suivantes :

$$f_i^{(1)}(n) = \delta \, \text{sign}\left(R_{\min,i} - R_i(n-1)\right) \left( \frac{R_i(n) - R_i(n-1)}{R_{\min,i}} \right)$$

$$f_i^{(2)}(n) = \frac{r_i(n)L - \overline{r_i(n)}L_i(n)}{\overline{r_i(n)}L_i(n)}$$

$$f_i^{(3)}(n) = \frac{r_i(n)L - \overline{R_i(n)}L_i(n)}{\overline{R_i(n)}L_i(n)}$$

où i identifie l'utilisateur, $n$ identifie l'intervalle de temps courant, $n$-1 identifie l'intervalle de temps précédent, $\delta$ est égal à la valeur un ou moins un, $R_{\min,i}$ est le débit minimum qui devrait être fourni à l'utilisateur, $R_i(x)$ est la moyenne temporelle à l'intervalle de temps de transmission $x$ du débit $r_i(x)$ que l'utilisateur peut atteindre à l'intervalle de temps de transmission $x$, $L$ est le nombre d'éléments de ressources, $L_i(n)$ est égal au nombre d'éléments de ressources utilisés pour déterminer $r_i(n)$ $\overline{r_i(n)}$ est le débit maximum instantané atteint lorsque tous les éléments de ressources sont supposés être alloués à l'utilisateur à l'intervalle de temps de transmission courant et $\overline{R_i(n)}$ est la moyenne temporelle du débit maximum instantané $\overline{r_i(n)}$.

**10.** Méthode selon la revendication 9, **caractérisée en ce que** la méthode comporte l'étape supplémentaire de calcul, pour chaque utilisateur :

$\Delta_i = (R_{\min,i} - R_i(\text{n-1}))$ avec $i$ =1 au nombre total d'utilisateurs $I$,
et **en ce que** chaque différence calculée $\Delta_i$ est strictement négative, $\delta$ est égal à - 1.

**11.** Méthode selon la revendication 9 ou 10, **caractérisée en ce que** la méthode comporte en outre l'étape de calcul, pour chaque utilisateur, d'une priorité instantanée de canal $c_i(n)$ selon la formule suivante :

$$c_i(n) = \frac{\overline{\frac{r_i(n)}{R_i(n)}}}{\sum_j \overline{\frac{r_j(n)}{R_j(n)}}}$$

**12.** Méthode selon l'une quelconque des revendications 9 à 11, **caractérisée en ce que** la méthode comporte en outre les étapes :

- d'obtention, pour chaque utilisateur, du délai de trafic maximum acceptable $d_{\max,i}$,
- de détermination, pour chaque utilisateur, de la quantité $q_i(n)$ de paquets dans la mémoire tampon allouée à l'utilisateur,
- de détermination, pour chaque utilisateur, du délai $d_i(n)$ de transfert des paquets dans la mémoire tampon allouée à l'utilisateur,
- de détermination, pour chaque utilisateur, du pourcentage $v$ de paquets violant les contraintes de qualité de service de l'utilisateur,
- de calcul, pour chaque utilisateur, d'une priorité $p_i(n)$ de service instantanée selon la formule suivante :

$$p_i(n) = \frac{(1 + v_i(n))\left(\dfrac{q_i(n)}{R_{\min,i}}\right)\left(\dfrac{1 + d_i(n)}{1 + d_{\max,i}}\right)}{\sum_j (1 + v_j(n))\left(\dfrac{q_j(n)}{R_{\min,j}}\right)\left(\dfrac{1 + d_j(n)}{1 + d_{\max,j}}\right)}$$

- de calcul, pour chaque utilisateur, d'une moyenne temporelle de priorité de service $P_i(n)$ selon la formule suivante :

$$P_i(n) = (1 - \frac{1}{t_c})P_i(n-1) + \frac{1}{t_c}p_i(n)$$

- de calcul pour chaque utilisateur, d'une moyenne temporelle de priorité de canal selon la formule suivante :

$$C_i(n) = (1 - \frac{1}{t_c})C_i(n-1) + \frac{1}{t_c}c_i(n).$$

**13.** Méthode selon l'une quelconque des revendications 9 à 12, **caractérisée en ce que** chaque sous fonction $f_i^{(1)}(n)$, $f_i^{(2)}(n)$ et $f_i^{(3)}(n)$ est en outre pondérée par un facteur respectif $\alpha_i^{(1)}(\boldsymbol{n})$, $\alpha_i^{(2)}(n)$, et $\alpha_i^{(3)}(n)$, déterminé selon les formules suivantes :

$$\alpha_i^{(1)}(n) = \alpha_i^{(1)}(n-1) + (p_i(n) - P_i(n-1))\alpha_i^{(1)}(n-1)$$

$$\alpha_i^{(2)}(n) = \alpha_i^{(2)}(n-1) + (c_i(n) - C_i(n-1))\alpha_i^{(2)}(n-1)$$

$$\alpha_i^{(3)}(n) = \alpha_i^{(3)}(n-1) + (c_i(n) - C_i(n-1))\alpha_i^{(3)}(n-1).$$

**14.** Méthode selon la revendication 13, **caractérisée en ce que** les sous fonctions pondérées sont sommées et la somme est multipliée par un facteur d'échelle d'équitabilité $\pi_i$ tel que :

$$\pi_i = \frac{R_{\min,i}}{\sum_j R_{\min,j}}.$$

**15.** Dispositif d'allocation de ressources d'un système à au moins deux utilisateurs ($10_1$, $10_l$), les ressources du système étant décomposées en éléments de ressources, le dispositif pour allouer les ressources comportant :

- des moyens (200, 206) pour obtenir, pour chaque utilisateur, le débit minimum qui devrait était fourni à l'utilisateur,
- des moyens (200, 206) pour obtenir des indicateurs de qualité de canal pour chaque utilisateur pour au moins une partie des éléments de ressource, et **caractérisé en ce qu'**il comporte :
- des moyens (200) pour déterminer, pour chaque utilisateur, une information à partir d'au moins un indicateur de canal,
- des moyens (200) pour déterminer, pour chaque utilisateur, une moyenne temporelle de l'information,
- des moyens (200) pour déterminer, pour chaque utilisateur, le débit maximum instantané lorsque tous les éléments de ressources sont supposés être alloués à l'utilisateur,
- des moyens (200) pour déterminer, pour chaque utilisateur, une moyenne temporelle du débit maximum instantané lorsque tous les éléments de ressources sont supposés être alloués à l'utilisateur,
- des moyens (200) pour allouer des éléments de ressources aux utilisateurs en fonction de l'optimisation d'un fonction d'utilité prenant en compte les débits minimum, les moyennes temporelles des informations, des débits maximum instantanés lorsque tous les éléments de ressources sont supposés être alloués à l'utilisateur et des moyennes temporelles des débits maximum instantanés lorsque tous les éléments de ressources sont supposés être alloués à l'utilisateur.

**16.** Programme d'ordinateur qui peut être chargé directement dans un dispositif programmable, comportant des instructions ou des portions de code pour implémenter les étapes de la méthode selon les revendications 1 à 14, quand ledit programme d'ordinateur est exécuté par un dispositif programmable.

20

50

10₁

Device for Allocating resources

User

10ₗ

User

## Fig. 1

20

206

200

Processor

CQI module

207

203

RAM

target rates

208

202

ROM

209

Parameters

201

## Fig. 2

S300 — Get CQI from each user

S301 — First user

S302 — First MCS

S303 — Calculate quality

S304 — Determine rate

S306 — Next MCS

S305 — All MCS ?

S307 — Calculate $\overline{r_i(n)}$

S308 — Calculate $\overline{R_i(n)}$

S309 — Calculate $\dfrac{\overline{r_i(n)}}{\overline{R_i(n)}}$

S310 — Calculate $\sum_i \dfrac{\overline{r_i(n)}}{\overline{R_i(n)}}$

S312 — Next user

S311 — All users ?

S313 — First user

S316 — Next user

S314 — Calculate $c_i(n)$

S315 — All users ?

Fig. 3a

S320 ─ Get minimum rate from each user

S321 ─ Get maximum delay from each user

S322 ─ First user

S323 ─ Determine $q_i(n)$

S324 ─ Determine $d_i(n)$

S325 ─ Determine $v_i(n)$

S326 ─ Calculate $(1+v_i(n))\left(\dfrac{q_i(n)}{R_{min,i}}\right)\left(\dfrac{1+d_i(n)}{1+d_{max,i}}\right)$

S327 ─ Calculate $\displaystyle\sum_j (1+v_j(n))\left(\dfrac{q_j(n)}{R_{min,j}}\right)\left(\dfrac{1+d_j(n)}{1+d_{max,j}}\right)$

S329 ─ Next user

S328 ─ All users ?

S330 ─ First user

S331 ─ Calculate $p_i(n)$

S333 ─ Next user

S332 ─ All users ?

## Fig. 3b

S340 — Get Time average window

S341 — Get time average users service and channel priorities at n-1

S342 — Get users channel and service priorities at n

S343 — Get users weigthing factors at n-1

S344 — First user

S345 — Calculate $P_i(n)$

S346 — Calculate $C_i(n)$

S347 — Calculate $\alpha_i^{(1)}(n)$

S348 — Calculate $\alpha_i^{(2)}(n)$

S349 — Calculate $\alpha_i^{(3)}(n)$

S351 — Next user

S350 — All users ?

## Fig. 3c

S360

Get minimum rate from each user

S361

Calculate $\pi_i$

S362

Get time average rates at n-1

S363

First user

S366

Next user

S364

Calculate $\Delta_i$

S365

All users ?

S367

All $\Delta_i < 0$?

S369

$\delta = +1$

S368

$\delta = -1$

Fig. 3d

S370 — Get Time-average window

S371 — Get CQI from each user

S372 — Order resources by decreasing CQI

S373 — Select resource $l=1$

S374 — First user

S375 — First MCS

S376 — Calculate quality

S377 — Determine rate

S378 — All MCS ?

S379 — Next MCS

S380 — Calculate $r_i(n)$

S381 — Calculate $R_i(n)$

S383 — Next user

S382 — All users ?

S387 — Next resource

S384 — Evaluation function for each user

S385 — Allocate resource element(s)

S386 — All resources ?

## Fig. 3e

Fig. 4a

Fig. 4b

Fig. 4c

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.M. Holtzman.** Asymptotic analysis of Proportional Fair algorithm. *Proc. of 12th IEEE PIMRC*
- **A. Jalali ; R. Padovani ; R. Pankaj.** Data Throughput of CDMA-HDR a high efficiency-high data Wireless personal communication system. *Proc. 50th annual Int. VTC,* May 2000, vol. 3, 1854-1858
- **N Zorba.** Robust multibeam opportunistic schemes under quality of service constraints. *IEEE international conference,* 01 June 2007, 5371-5376